# EUROPÄISCHE PATENTSCHRIFT

(11) **EP 3 388 269 B1**
(45) Veröffentlichungstag und Bekanntmachung des Hinweises auf die Patenterteilung: **09.10.2019**
(21) Anmeldenummer: 18167150.4
(22) Anmeldetag: 13.04.2018
(51) Int. Cl.: B60J 10/16, B60J 10/17, B60J 10/34, B62D 25/06, B62D 27/02, B62D 65/02

(54) **ZWISCHENELEMENT FÜR EIN FAHRZEUGDACH UND BEFESTIGUNGSANORDNUNG FÜR EIN FAHRZEUGDACH**
INTERMEDIATE ELEMENT FOR A VEHICLE ROOF AND FASTENING DEVICE FOR A VEHICLE ROOF
ÉLÉMENT INTERMÉDIAIRE POUR UN TOIT DE VÉHICULE ET DISPOSITIF DE FIXATION POUR UN TOIT DE VÉHICULE

(30) Priorität: 15.04.2017 DE 102017003717
(43) Veröffentlichungstag der Anmeldung: 17.10.2018
(73) Patentinhaber: AUDI AG, 85045 Ingolstadt (DE)
(72) Erfinder: Brymerski, Wojciech, 70806 Kornwestheim (DE); Werum, Daniel, 74076 Heilbronn (DE); Kobsik, Thomas, 86405 Meitingen (DE)

(56) Entgegenhaltungen:
- EP-A2- 1 559 600
- WO-A1-2012/131220
- DE-A1- 4 310 754
- DE-A1- 10 254 573
- DE-A1-102014 011 804

## Beschreibung

Die Erfindung betrifft eine Befestigungsanordnung eines Fahrzeugdachs gemäß der Gattung des Patentanspruchs 1.

Befestigungsanordnungen für Fahrzeugdächer sind in zahlreichen Variationen bekannt, hierbei ist häufig eine sogenannte Nullfuge zwischen dem Fahrzeugdach und der Fahrzeugkarosserie erwünscht. Diese kann beispielsweise durch einen Laserschweißprozess umgesetzt werden. Das Fahrzeugdach kann an der Fahrzeugkarosserie vorfixiert werden. Zwischenelemente, welche beispielsweise das Fahrzeugdach an der Fahrzeugkarosserie vorfixieren, sind ebenfalls in zahlreichen Variationen bekannt.

Aus der DE 10 2009 035 728 A1 ist ein Verfahren zur Montage eines Dachelements an einer Karosserie eines Fahrzeugs bekannt, wobei das Dachelement bezüglich eines Dachrahmenelements von einer Vorfixierstellung in eine Endmontagestellung verbracht wird. Das Dachelement wird in seiner Vorfixierstellung über eine Vorfixierpaarung zumindest eines dachelementseitigen und zumindest eines dachrahmenelementseitigen Vorfixierelements vorfixiert.

Aus der DE 10 2009 048 168 A1 ist ein Verfahren zum Herstellen einer Verbindung von zwei Karosseriebauteilen bekannt. Die Bauteile werden mittels eines Zwischenelements vorläufig gegeneinander fixiert. Das erste Bauteil ist dabei mit einer Auflagefläche des Zwischenelements verbunden und eine Lasche des Zwischenelements wird in eine Durchtrittsöffnung des zweiten Bauteils eingeführt. Die Lasche kann reversibel umgebogen werden und beide Bauteile temporär, beispielsweise während eines Lackierungsvorgangs gegeneinander fixieren.

Aus der WO 2012/131220 A1 ist eine gattungsgemäße Befestigungsanordnung eines Fahrzeugdachs an einer Fahrzeugkarosserie bekannt, wobei das Fahrzeugdach ein Dachelement mit einer nach außen gerichteten Dachfläche und einer in den Fahrzeuginnenraum gerichteten Innenfläche aufweist. An einem der Karosserie zugewandten Bereich des Fahrzeugdachs ist eine Kleberaupe aufgebracht, welche das Fahrzeugdach an korrespondierenden Karosserieelementen befestigt. Zwischen dem Fahrzeugdach und mindestens einem Karosserieelement ist ein Zwischenelement angeordnet, welches mindestens zwei Komponenten umfasst. Hierbei besteht mindestens eine erste Komponente zumindest teilweise aus einem elastischen Kunststoff und ermöglicht durch die Elastizität einen Toleranzausgleich zwischen dem mindestens einen Dachelement und dem mindestens einen Karosserieelement.

Zudem liegt der Erfindung die Aufgabe zugrunde eine Befestigungsanordnung eines Fahrzeugdachs an einer Fahrzeugkarosserie bereitzustellen, welches eine einfache Montage des Fahrzeugdachs an der Fahrzeugkarosserie mit einer Nullfuge ermöglicht.

Erfindungsgemäß wird die Aufgabe durch eine Befestigungsanordnung eines Fahrzeugdachs mit den Merkmalen des Patentanspruchs 1 gelöst. Vorteilhafte Ausführungsformen und Weiterbildungen der Erfindung sind in den abhängigen Ansprüchen angegeben.

Um eine Befestigungsanordnung eines Fahrzeugdachs bereitzustellen, welches eine einfache Montage des Fahrzeugdachs an einer Fahrzeugkarosserie mit einer Nullfuge ermöglicht, ist an einem der Karosserie zugewandten Bereich des Fahrzeugdachs eine Kleberaupe aufgebracht, welche das Fahrzeugdach an korrespondierenden Karosserieelementen befestigt, wobei zwischen dem Fahrzeugdach und mindestens einem Karosserieelement ein Zwischenelement mit mindestens zwei Komponenten angeordnet ist. Hierbei besteht mindestens eine erste Komponente zumindest teilweise aus einem elastischen Kunststoff und ermöglicht durch die Elastizität einen Toleranzausgleich zwischen dem mindestens einen Dachelement und dem mindestens einen Karosserieelement. Zudem ist das Zwischenelement zwischen dem Verstärkungsrahmen des Dachelements und dem mindestens einen Karosserieelement angeordnet. Hierbei kann das Zwischenelement am Dachelement und am Verstärkungsrahmen befestigt werden. Alternativ kann das Zwischenelement nur am Verstärkungsrahmen befestigt werden. Das Zwischenelement mit den Auflageflächen ist hierbei in vorteilhafter Weise an das Modell des Fahrzeugdachs und an die Abmessungen der Innenfläche oder an die Abmessungen des Verstärkungsrahmens anpassbar. Zudem kann das Zwischenelement an eine Überlappung zwischen dem Dachelement und dem Verstärkungsrahmen angepasst werden.

Das zu befestigende Fahrzeugdach umfasst ein Dachelement mit einer nach außen gerichteten Dachfläche und einer in den Fahrzeuginnenraum gerichteten Innenfläche. Zudem ist am Rand des Dachelements ein in Fahrzeuglängsrichtung verlaufender Verstärkungsrahmen oder ein umlaufender Verstärkungsrahmen angeordnet.

Unter einer Nullfuge wird im Folgenden der scheinbar unsichtbare Übergang zwischen dem Fahrzeugdach und der Fahrzeugkarosserie verstanden. Der Betrachter erkennt mit bloßem Auge keine Fuge mehr. Hierbei sehen das Fahrzeugdach und Fahrzeugkarosserie wie aus einem Guss aus. Technisch betrachtet ist immer noch eine Fuge zwischen Fahrzeugdach und Fahrzeugkarosserie angeordnet, auch wenn diese fast nicht sichtbar ist.

In vorteilhafter Weise kann das Zwischenelement die Aufgaben einer Dichtung erfüllen. Zudem kann das Fahrzeugdach auf die Karosserie geklebt werden, da die Toleranzen zwischen dem Fahrzeugdach und der Fahrzeugkarosserie durch das elastische erfindungsgemäße Zwischenelement ausgeglichen werden können. Dadurch kann auf einen aufwendigen Laserschweißprozess verzichtet werden, um eine Nullfuge zu schaffen.

In vorteilhafter Weise kann zur Umsetzung der erfindungsgemäßen Befestigungsanordnung in der Montagelinie zunächst eine Kleberaupe aus einem Scheibenkleber auf das Fahrzeugdach aufgetragen werden und das Fahrzeugdach mit einem Greifer auf der Fahrzeugkarosserie positioniert werden. Der Scheibenkleber härtet in vorteilhafter Weise innerhalb von mehreren Stunden aus. Das Fahrzeugdach kann in vorteilhafter Weise zusätzlich mit mindestens vier Schrauben an der Fahrzeugkarosserie fixiert werden, um ein Verrutschen in Fahrzeuglängsrichtung oder Fahrzeugquerrichtung zu verhindern. Hierbei wird die Fahrzeugkarosserie nicht ausgeschleust und kann im normalen Zyklus montiert werden. Dadurch kann in vorteilhafter Weise eine kostengünstige Montagelösung geschaffen werden, da das Fahrzeugdach direkt in der Montagelinie innerhalb einer vorgegeben Taktzeit verbaut werden kann.

In vorteilhafter Ausgestaltung des Zwischenelements kann die mindestens eine erste Komponente elastischer als mindestens eine zweite Komponente ausgeführt werden. Hierbei kann die mindestens eine erste Komponente beispielsweise als Moosgummi, und die mindestens eine zweite Komponente kann beispielsweise als Solidkautschuk ausgeführt werden. Die mindestens eine zweite Komponente ist hierbei im Wesentlichen formstabil und die mindestens eine erste Komponente gleicht durch ihr elastisches Verhalten bestehende Toleranzen zwischen dem mindestens einen Dachelement und dem mindestens einen Karosserieelement aus. Zudem kann durch die beiden Komponenten in vorteilhafter Weise ein geschlossenes Profil, welches keine Endkappen bzw. Verschlussendstücke benötigt, umgesetzt werden.

In weiterer vorteilhafter Ausgestaltung des Zwischenelements kann die mindestens eine erste Komponente eine erste Oberfläche aufweisen, welche eine erste Auflagefläche für das mindestens eine Karosserieelement ausbildet, und die mindestens eine zweite Komponente kann eine zweite Oberfläche aufweisen, welche eine zweite Auflagefläche für das Fahrzeugdach ausbildet. Hierbei kann das Zwischenelement beispielsweise über ein Befestigungselement an der zweiten Oberfläche mit dem Fahrzeugdach verbunden werden. Die erste Oberfläche kann an das mindestens eine Karosserieelement angepresst und durch den Anpressdruck mit dem mindestens einen Karosserieelement gekoppelt werden.

In weiterer vorteilhafter Ausgestaltung des Zwischenelements kann auf die erste Oberfläche zumindest teilweise ein Gleitlack aufgebracht werden. Der Gleitlack kann in vorteilhafter Weise während der Positionierung des mit dem Zwischenelement verbunden Fahrzeugdachs, ein leichteres Gleiten der ersten Oberfläche des Zwischenelements auf dem mindestens einen Karosserieelement ermöglichen. Dadurch kann die Positionierung des Fahrzeugdachs auf der Fahrzeugkarosserie in vorteilhafter Weise erleichtert werden.

In weiterer vorteilhafter Ausgestaltung des Zwischenelements kann auf die zweite Auflagefläche ein Haftelement aufgebracht werden. Dieses Haftelement kann beispielsweise einem doppelseitigen Klebeband entsprechen, welches in vorteilhafter Weise bei Bedarf auf die zweite Auflagefläche aufgeklebt werden kann. Die Vormontagegruppe aus Zwischenelement und Haftelement kann in vorteilhafter Weise zwischengelagert werden. Bei Bedarf kann das Zwischenelement durch das doppelseitige Klebeband mit dem Fahrzeugdach verbunden werden. Alternativ kann beispielsweise Scheibenkleber auf die zweite Auflagefläche aufgebracht werden, um die zweite Oberfläche mit dem mindestens einen Karosserieelement zu verbinden.

In weiterer vorteilhafter Ausgestaltung der erfindungsgemäßen Befestigungsanordnung kann das mindestens eine Karosserieelement, welches mit dem Zwischenelement gekoppelt ist, als ein in Fahrzeuglängsrichtung verlaufender Seitenwandrahmen ausgeführt werden.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigt:
- Fig. 1: eine schematische perspektivische Darstellung einer Fahrzeugkarosserie mit einem Ausführungsbeispiel einer erfindungsgemäßen Befestigungsanordnung eines Fahrzeugdachs,
- Fig. 2: eine schematische Schnittdarstellung eines Ausführungsbeispiels eines Zwischenelements,
- Fig. 3: eine schematische Schnittdarstellung der erfindungsgemäßen Befestigungsanordnung aus Fig. 1 entlang der Fahrzeuglängsachse im Bereich der Fahrzeugfront, und
- Fig. 4: eine schematische Schnittdarstellung eines ersten Ausführungsbeispiels der erfindungsgemäßen Befestigungsanordnung aus Fig. 1 entlang der Fahrzeugquerachse mit einem Zwischenelement aus Fig. 2.

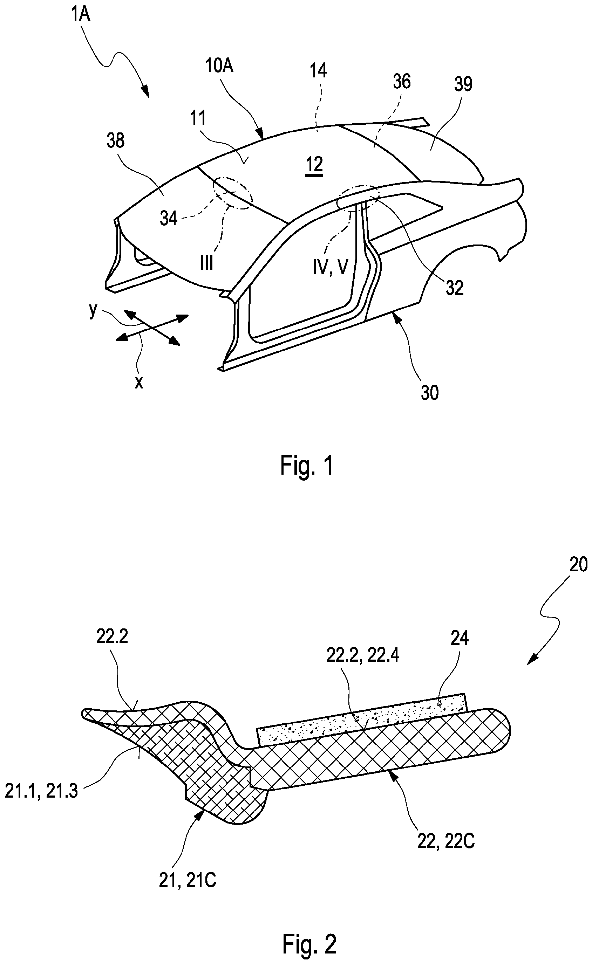

Wie aus Fig. 1 bis 4 ersichtlich ist, ist ein Fahrzeugdach 10A über eine Befestigungsanordnung 1A an einer Fahrzeugkarosserie 30 befestigt. Das zu befestigende Fahrzeugdach 10A umfasst ein Dachelement 12 mit einer nach außen gerichteten Dachfläche 11 und einer in den Fahrzeuginnenraum gerichteten Innenfläche 12A. Zudem ist im dargestellten Ausführungsbeispiel am Rand des Dachelements 12 ein Verstärkungsrahmen 14, 14A angeordnet. Dieser Verstärkungsrahmen 14, 14A kann in Fahrzeuglängsrichtung x verlaufen oder als umlaufender Verstärkungsrahmen 14, 14A ausgeführt werden.

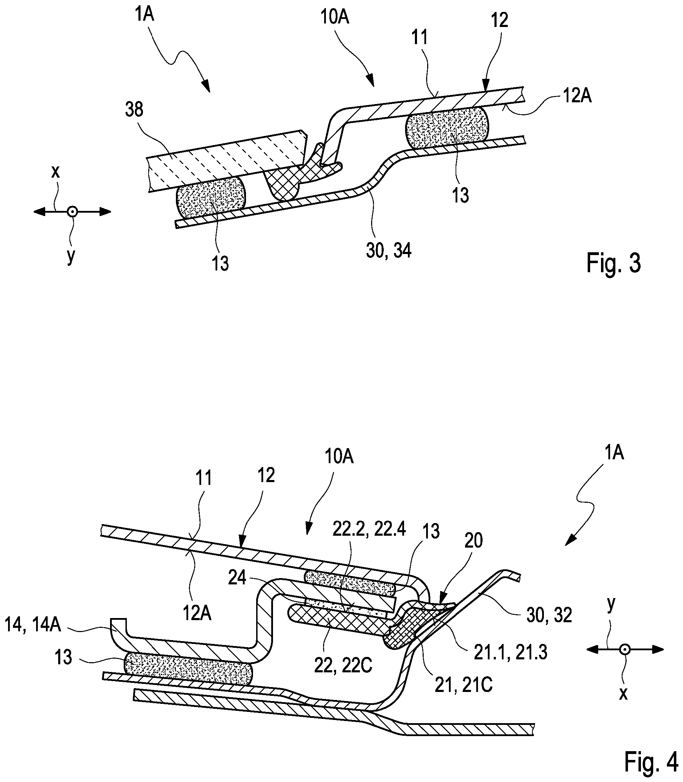

Wie aus Fig. 4 weiter ersichtlich ist, ist ein Zwischenelement 20 für ein Fahrzeugdach 10A zwischen dem Fahrzeugdach 10A und mindestens einem Karosserieelement 32 positioniert.

Hierbei umfasst das erfindungsgemäße Zwischenelement 20 mindestens zwei Komponenten 21, 22, wobei mindestens eine erste Komponente 21 zumindest teilweise aus einem elastischen Kunststoff besteht und durch die Elastizität einen Toleranzausgleich zwischen dem Fahrzeugdach 10A und dem mindestens einen Karosserieelement 32 ermöglicht.

Die erfindungsgemäße Befestigungsanordnung umfasst eine Kleberaupe 13, welche an einem der Karosserie 30 zugewandten Bereich des Fahrzeugdachs 10A umlaufend aufgebracht ist und das Fahrzeugdach 10A an korrespondierenden Karosserieelementen 32, 34, 36 befestigt, wobei zwischen dem Fahrzeugdach 10A und mindestens einem Karosserieelement 32 ein oben beschriebenes Zwischenelement 20 positioniert ist.

Das in Fig. 2 dargestellte Ausführungsbeispiel des Zwischenelements 20 weist eine erste Komponente 21 und eine zweite Komponente 22 auf. Hierbei ist die erste Komponente 21 elastischer als die zweite Komponente ausgeführt. Hierbei ist die erste Komponente 21 als Moosgummi 21C, und die zweite Komponente 22 ist als Solidkautschuk 22C ausgeführt. Im dargestellten Ausführungsbeispiel umschließt die zweite Komponente 22 die erste Komponente 21 zumindest teilweise und stabilisiert das erfindungsgemäße Zwischenelement 20. In einem alternativen nicht dargestellten Ausführungsbeispiel des erfindungsgemäßen Zwischenelements 20 können mehrere erste Komponenten 21 auf der zweiten Komponente 22 angeordnet werden. Zudem kann das erfindungsgemäße Zwischenelement 20 in einem alternativen nicht dargestellten Ausführungsbeispiel weitere Komponenten aufweisen.

Wie aus Fig. 1 und 4 weiter ersichtlich ist, weist die erste Komponente 21 eine erste Oberfläche 21.1 auf, welche eine erste Auflagefläche 21.3 für das mindestens eine Karosserieelement 32 ausbildet. Die zweite Komponente 22 weist eine zweite Oberfläche 22.2 auf, welche eine zweite Auflagefläche 22.4 für das mindestens eine Dachelement 12 ausbildet. Im dargestellten Ausführungsbeispiel des erfindungsgemäßen Zwischenelements 20 ist auf die erste Oberfläche 21.1 zumindest teilweise ein Gleitlack aufgebracht, welcher ein leichteres Gleiten des erfindungsgemäßen Zwischenelements 20 auf dem mindestens einen Karosserieelement 32 ermöglicht. Auf die zweite Auflagefläche 22.4 ist ein Haftelement 24 aufgebracht. Im dargestellten Ausführungsbeispiel des erfindungsgemäßen Zwischenelements 20 ist das Haftelement 24 als doppelseitiges Klebeband ausgeführt. Es können aber auch andere geeignete Haftmittel eingesetzt werden.

Wie aus Fig. 1 weiter ersichtlich ist, ist das Fahrzeugdach 10A an einem Oberteil eines Frontscheibenrahmens 34, einem Oberteil eines Heckscheibenrahmens 36 und an den Oberteilen zweier parallel zueinander verlaufender Seitenwandrahmen 32 befestigt.

Im dargestellten Ausführungsbeispiel des Fahrzeugdachs 10A ist eine in den Fahrzeuginnenraum gerichteten Oberfläche des Fahrzeugdachs mit einer Innenverkleidung verklebt. Hierbei kann die in den Fahrzeuginnenraum gerichtete Oberfläche des Dachelements 12 direkt oder die Innenverkleidung die Innenfläche 12A ausbilden. An dieser Innenfläche 12A ist an den äußeren, in Fahrzeuglängsrichtung x verlaufenden Rändern jeweils der Verstärkungsrahmen 14A angeklebt.

Wie aus Fig. 3 weiter ersichtlich ist, überlappt das Dachelement 12 an der Fahrzeugfront in Richtung Frontscheibe 38 den Frontscheibenrahmen 34 und ragt über die in Fig. 3 nicht sichtbaren Verstärkungsrahmen 14A hinaus. Der abstehende Bereich des Dachelements 12 ist mittels einer Kleberaupe 13 am in Fahrzeugquerrichtung y verlaufenden oberen Bereich des Frontscheibenrahmens 34 festgeklebt. Das Dachelement 12 kann am Fahrzeugheck in Richtung Heckscheibe 39 den Heckscheibenrahmen 36 überlappen und ebenfalls über die Verstärkungsrahmen 14A hinausragen. Der überstehende Bereich des Dachelements 12 kann mittels einer Kleberaupe 13 am in Fahrzeugquerrichtung y verlaufenden oberen Bereich des Heckscheibenrahmens 36 festgeklebt werden.

Wie aus Fig. 4 weiter ersichtlich ist, ist das Karosserieelement, welches über das Zwischenelement 20 mit dem Fahrzeugdach 10A gekoppelt ist, als oberer Bereich des Seitenwandrahmens 32 ausgeführt und verläuft im Wesentlichen in Fahrzeuglängsrichtung x.

Bei dem in Fig. 4 dargestellten ersten Ausführungsbeispiel der erfindungsgemäßen Befestigungsanordnung 1A überragt das Dachelement 12 des Fahrzeugdachs 10A den Verstärkungsrahmen 14A in Fahrzeugquerrichtung y nur unwesentlich. Hierbei ist das Zwischenelement 20 am Verstärkungsrahmen 14A befestigt. Im dargestellten Ausführungsbeispiel bildet das Zwischenelement 20 eine zweite Auflagefläche 22.4 aus, an welcher ein abgewinkelter Endbereich des Verstärkungsrahmens 14A aufliegt. Zudem ist der Verstärkungsrahmen 14A über das Haftmittel 24 mit der zweiten Auflagefläche 22.4 des Zwischenelements 20 verklebt. Hierbei ist eine Unterseite des Verstärkungsrahmens 14A mit dem Zwischenelement 20 verklebt und eine gegenüberliegende Oberseite des Verstärkungsrahmens 14A ist mit der Innenfläche 12A des Dachelements 12 verklebt.

Wie aus Fig. 4 weiter ersichtlich ist, ist das mindestens eine Karosserieelement 32, welches mit dem Zwischenelement 20 gekoppelt ist, als ein in Fahrzeuglängsrichtung x verlaufender Seitenwandrahmen 32 ausgeführt. Dieser Seitenwandrahmen 32 weist im dargestellten Ausführungsbeispiel einen Querschnitt mit einer Stufe auf, an welcher sich die erste Auflagefläche 21.3 des Zwischenelements 20 abstützt. Hierbei ist keine Kleberaupe 13 zwischen der ersten Auflagefläche 21.3 und dem Seitenwandrahmen 32 angeordnet. Im dargestellten Ausführungsbeispiel ist der Verstärkungsrahmen 14A mit dem Seitenwandrahmen 32 verklebt. Die Innenfläche 12A des Dachelements 12 ist über das Zwischenelement 20 mit dem Seitenwandrahmen 32 gekoppelt.

Bei einem korrespondierenden nicht dargestellten Montageverfahren kann das Dachelement 12 mit dem Verstärkungsrahmen 14 verklebt werden. Anschließend kann das Zwischenelement 20 am Verstärkungsrahmen 14 oder an der Innenfläche 12B des Dachelements 12 befestigt werden. Anschließend können die Kleberaupen 13 auf die Innenfläche 12A des Dachelements 12 und/oder den Verstärkungsrahmen 14 aufgebracht werden. Dann kann das Fahrzeugdach 10A mit den beiden Zwischenelementen 20 mit einem Greifer auf der Fahrzeugkarosserie 30 positioniert werden. Zudem kann das Fahrzeugdach zusätzlich mit mindestens vier Schrauben an der Fahrzeugkarosserie 30 fixiert werden.

### BEZUGSZEICHENLISTE

- 1A: Befestigungsanordnung
- 10A: Fahrzeugdach
- 11: Dachfläche
- 12: Dachelement
- 12A: Innenfläche
- 13: Kleberaupe
- 14, 14A: Verstärkungsrahmen
- 20: Zwischenelement
- 21: erste Komponente
- 21.1: erste Oberfläche
- 21.3: erste Auflagefläche
- 21C: Moosgummi
- 22: zweite Komponente
- 22.2: zweite Oberfläche
- 22.4: zweite Auflagefläche
- 22C: Solidkautschuk
- 24: Haftmittel
- 30: Fahrzeugkarosserie
- 32: Seitendwandrahmen
- 34: Fronscheibenrahmen
- 36: Heckscheibenrahmen
- 38: Frontscheibe
- 39: Heckscheibe
- x: Fahrzeuglängsrichtung
- y: Fahrzeugquerrichtung

## Patentansprüche

1. Befestigungsanordnung (1A) eines Fahrzeugdachs (10A) an einer Fahrzeugkarosserie (30), wobei das Fahrzeugdach (10A) ein Dachelement (12) mit einer nach außen gerichteten Dachfläche (11) und einer in den Fahrzeuginnenraum gerichteten Innenfläche (12A) aufweist, wobei an einem der Karosserie (30) zugewandten Bereich des Fahrzeugdachs (10A) eine Kleberaupe (13) aufgebracht ist, welche das Fahrzeugdach (10A) an korrespondierenden Karosserieelementen (32, 34, 36) befestigt, wobei zwischen dem Fahrzeugdach (10A) und mindestens einem Karosserieelement (32) ein Zwischenelement (20) angeordnet ist, welches mindestens zwei Komponenten (21, 22) umfasst, wobei mindestens eine erste Komponente (21) zumindest teilweise aus einem elastischen Kunststoff besteht und durch die Elastizität einen Toleranzausgleich zwischen dem mindestens einen Dachelement (12, 14) und dem mindestens einen Karosserieelement (32) ermöglicht, wobei das Zwischenelement (20) zwischen einem Verstärkungsrahmen (14, 14A), welcher mit dem Dachelement (12) und dem Karosserieelement (32) verbunden ist, und dem mindestens einen Karosserieelement (32) angeordnet ist, **dadurch gekennzeichnet, dass** das Zwischenelement (20) nur am Verstärkungsrahmen (14, 14A) befestigt ist.

2. Befestigungsanordnung (1A) nach Anspruch 1, **dadurch gekennzeichnet, dass** die mindestens eine erste Komponente (21) elastischer als mindestens eine zweite Komponente (22) ausgeführt ist.

3. Befestigungsanordnung (1A) nach Anspruch 1 oder 2, **dadurch gekennzeichnet, dass** die mindestens eine erste Komponente (21) als Moosgummi (21C) und die mindestens eine zweite Komponente (22) als Solidkautschuk (22C) ausgeführt ist.

4. Befestigungsanordnung (1A) nach einem der Ansprüche 1 bis 3, **dadurch gekennzeichnet, dass** die mindestens eine erste Komponente (21) eine erste Oberfläche (21.1) aufweist, welche eine erste Auflagefläche (21.3) für das mindestens eine Karosserieelement (32) ausbildet, und die mindestens eine zweite Komponente (22) eine zweite Oberfläche (22.2) aufweist, welche eine zweite Auflagefläche (22.4) für das Fahrzeugdach (10A) ausbildet.

5. Befestigungsanordnung (1A) nach Anspruch 4, **dadurch gekennzeichnet, dass** auf die erste Oberfläche (21.1) zumindest teilweise ein Gleitlack aufgebracht ist.

6. Befestigungsanordnung (1A) nach Anspruch 4 oder 5, **dadurch gekennzeichnet, dass** auf die zweite Auflagefläche (22.4) ein Haftelement (24) aufgebracht ist.

7. Befestigungsanordnung nach einem der Ansprüche 1 bis 6, **dadurch gekennzeichnet, dass** das mindestens eine Karosserieelement (32) als ein in Fahrzeuglängsrichtung (x) verlaufender Seitenwandrahmen ausgeführt ist.

## Claims

1. Fastening arrangement (1A) of a vehicle roof (10A) on a vehicle body (30), wherein the vehicle roof (10A) has a roof element (12) with an outwardly directed roof surface (11) and an inner surface (12A) directed into the vehicle interior, wherein a glue bead (13) which fastens the vehicle roof (10A) to corresponding body elements (32, 34, 36) is applied to a region of the vehicle roof (10A) facing the body (30), wherein an intermediate element (20) which comprises at least two components (21, 22) is arranged between the vehicle roof (10A) and at least one body element (32), wherein at least one first component (21) is made at least partially of an elastic plastic and, by the elasticity, allows a compensation for tolerances between the at least one roof element (12, 14) and the at least one body element (32), wherein the intermediate element (20) is arranged between a reinforcing frame (14, 14A), which is connected to the roof element (12) and the body element (32), and the at least one body element (32), **characterised in that** the intermediate element (20) is fastened only to the reinforcing frame (14, 14A).

2. Fastening arrangement (1A) according to claim 1, **characterised in that** the at least one first component (21) is configured to be more elastic than at least one second component (22).

3. Fastening arrangement (1A) according to claim 1 or 2, **characterised in that** the at least one first component (21) is configured as sponge rubber (21C) and the at least one second component (22) is configured as solid rubber (22C).

4. Fastening arrangement (1A) according to any of claims 1 to 3, **characterised in that** the at least one first component (21) has a first surface (21.1) which forms a first support surface (21.3) for the at least one body element (32), and the at least one second component (22) has a second surface (22.2) which forms a second support surface (22.4) for the vehicle roof (10A).

5. Fastening arrangement (1A) according to claim 4, **characterised in that** an antifriction coating is applied at least partially to the first surface (21.1).

6. Fastening arrangement (1A) according to claim 4 or 5, **characterised in that** an adhesion element (24) is applied to the second support surface (22.4).

7. Fastening arrangement according to any of claims 1 to 6, **characterised in that** the at least one body element (32) is configured as a side wall frame extending in the vehicle longitudinal direction (x).

## Revendications

1. Dispositif de fixation (1A) d'un toit de véhicule (10A) au niveau d'une carrosserie de véhicule (30), dans lequel le toit de véhicule (10A) présente un élément de toit (12) avec une surface de toit (11) dirigée vers l'extérieur et une surface intérieure (12A) dirigée vers l'habitacle du véhicule, dans lequel une chenille de colle (13) est appliquée au niveau d'une zone du toit de véhicule (10A) tournée vers la carrosserie (30), laquelle fixe le toit de véhicule (10A) à des éléments de carrosserie correspondants (32, 34, 36), dans lequel un élément intermédiaire (20) est agencé entre le toit de véhicule (10A) et au moins un élément de carrosserie (32), lequel comprend au moins deux composants (21, 22), dans lequel au moins un premier composant (21) se compose au moins en partie d'un plastique élastique et permet par l'élasticité une compensation de tolérance entre l'au moins un élément de toit (12, 14) et l'au moins un élément de carrosserie (32), dans lequel l'élément intermédiaire (20) est agencé entre un cadre de renforcement (14, 14A), lequel est relié à l'élément de toit (12) et à l'élément de carrosserie (32), et l'au moins un élément de carrosserie (32), **caractérisé en ce que** l'élément intermédiaire (20) est seulement fixé au cadre de renforcement (14, 14A).

2. Dispositif de fixation (1A) selon la revendication 1, **caractérisé en ce que** l'au moins un premier composant (21) est réalisé plus élastique qu'au moins un deuxième composant (22).

3. Dispositif de fixation (1A) selon la revendication 1 ou 2, **caractérisé en ce que** l'au moins un premier composant (21) est réalisé en tant que caoutchouc mousse (21C) et l'au moins un deuxième composant (22) est réalisé en tant que caoutchouc solide (22C).

4. Dispositif de fixation (1A) selon l'une quelconque des revendications 1 à 3, **caractérisé en ce que** l'au moins un premier composant (21) présente une première surface (21.1), laquelle forme une première surface de dépôt (21.3) pour l'au moins un élément de carrosserie (32), et l'au moins un deuxième composant (22) présente une deuxième surface (22.2), laquelle forme une deuxième surface de dépôt (22.4) pour le toit de véhicule (10A).

5. Dispositif de fixation (1A) selon la revendication 4, **caractérisé en ce qu'**un vernis antifriction est appliqué au moins en partie sur la première surface (21.1).

6. Dispositif de fixation (1A) selon la revendication 4 ou 5, **caractérisé en ce qu'**un élément adhésif (24) est appliqué sur la deuxième surface de dépôt (22.4).

7. Dispositif de fixation selon l'une quelconque des revendications 1 à 6, **caractérisé en ce que** l'au moins un élément de carrosserie (32) est réalisé en tant que cadre de paroi latérale s'étendant dans la direction longitudinale du véhicule (x).
